# EUROPEAN PATENT SPECIFICATION

(11) **EP 2 375 381 B1**
(45) Date of publication and mention of the grant of the patent: **21.11.2012**
(21) Application number: 11161502.7
(22) Date of filing: 07.04.2011
(51) Int. Cl.: G06T 7/00, G06F 3/048

(54) **Image processing apparatus**
Bildverarbeitungsvorrichtung
Appareil de traitement d'images

(30) Priority: 07.04.2010 JP 2010088859
(43) Date of publication of application: 12.10.2011
(73) Proprietor: OMRON Corporation, Shiokoji-dori, Shimogyo-ku Kyoto-shi Kyoto 600-8530 (JP)
(72) Inventor: Mitani, Daisuke, Kyoto-shi, Kyoto 600-8530 (JP); Taniyasu, Yuki, Kyoto-shi, Kyoto 600-8530 (JP); Yoshiura, Takeshi, Kyoto-shi, Kyoto 600-8530 (JP); Shimada, Koji, Kyoto-shi, Kyoto 600-8530 (JP)
(74) Representative: Horn Kleimann Waitzhofer

(56) References cited:
- WO-A2-2007/061827
- US-A1- 2006 107 223
- US-A1- 2010 053 213
- "PV310 Micro-Imagechecker", www.google.com , February 2007 (2007-02), XP002648044, Retrieved from the Internet: URL:http://www.panasonic-electric-works.pl /pewpl/pl/downloads/ds_x633_en_pv310.pdf [retrieved on 2011-07-04]

## Description

### BACKGROUND OF THE INVENTION

### 1. TECHNICAL FIELD

The present invention relates to an image processing apparatus, and in particular to an image processing apparatus that controls display of a processing target image and display of a menu related to image processing functions on the same screen.

### 2. RELATED ART

In the field of FA (Factory Automation) and the like, a so-called visual sensor is used as an apparatus for optically detecting defects in half-finished products in the manufacturing process, in finished products before shipping, and the like, and for optically measuring the size of such defects.

When performing detection and measurement with a visual sensor, an image of a workpiece (object) is captured, and inspection and measurement are carried out by performing various types of image processing on the input image obtained by imaging. When a visual sensor is installed at an actual manufacturing site or the like, an image processing apparatus is used to process a captured input image that has been output from the imaging apparatus included in the visual sensor. A user then displays the input image on a monitor, and sets values for various items related to inspection and measurement while checking the displayed input image. A function for displaying an image serving as the processing target and an image processing menu on the same screen is proposed in Japanese Unexamined Patent Application No. H07-160456, for example.

Japanese Unexamined Patent Application No. H07-160456 discloses a display method for dividing a display screen into a work area in which the processing target image is displayed and a display area in which the image processing menu is displayed. As long as the screen is sufficiently large, the visibility of the processing target image will not suffer even if the work area and the image processing menu display area are displayed on the same screen at the same time.

However, the screen size is limited in the case of, for example, a display device carried around a manufacturing site or the like, and therefore when the area for displaying the processing target image and the image processing menu display area are displayed on the same screen at the same time as in Japanese Unexamined Patent Application No. H07-160456, the areas will inevitably be small. For this reason, the user cannot sufficiently check the processing target image when selecting an item from the menu while checking the processing target image, and thus the operability in such a display method is poor.

US 2006/107223 discloses a system and method for automating the setup of Locators and Detectors within an image view of an object on the HMI of a vision detector by determining detectable edges and best fitting the Locators and Detectors to a location on the object image view following the establishment of an user selected operating point on the image view, such as by clicking a GUI cursor. In this manner, the initial placement and sizing of the graphical elements for Locator and Detector ROls are relatively optimized without excessive adjustment by the user. Locators can be selected for direction, including machine or line-movement direction, cross direction or angled direction transverse to cross direction and movement direction. Detectors can be selected based upon particular analysis tools, including brightness tools, contrast tools and trained templates. The Locators and detectors are each associated with a particular set of operating parameters, such as activation threshold, which are displayed in a control box within the GUI.

An industrial machine vision system is disclosed in the document "PV310". URL:http://www.panasonic-electric-works.pl/pewpl/pl/downloads/ds x633 en pv310.pdf, [retrieved on March 12, 20121. This system is an industrial inspection system for optical detection of defects, with a transparent menu function, in which the property windows can be switched to a translucent display mode, in order to allow operations to be carried out while viewing captured images.

US 2010/053213 A1 discloses a storage device of a report producing terminal storing an importance table. The importance table stores grades of importance of respective items of accessory information on medical images. Prior to displaying a medical image on a screen, an area defining section extracts a main subject display area of the medical image, and defines an accessory information display area outside the main subject display area. A display style defining section calculates a necessary display area for each individual item of the accessory information, and discriminates between those items which fit in the accessory information display area and those which do not. The display style defining section decides not to display the items which do not fit in the accessory information display area, or decides to display them in a transparent style, in a scrolling style, in a switching style or with a small font.

In WO2007/061827 A2, systems, methods, computer-readable mediums, user interfaces and other implementations are disclosed for organizing managing and presenting widgets in display areas associated with multiple dashboard environments. In some implementations, a first display area associated with a first dashboard environment is configured for displaying at least one widget from a first set of widgets. A second display area associated with a second dashboard environment is configured for displaying at least one widget from a second set of widgets.

In view of this, an object of the present invention is to provide an image processing apparatus that can display an image without impairing visibility, even in the case of a screen having a limited size.

An image processing apparatus of the present invention is an image processing apparatus for processing an image of a target object while displaying the image of the target object on a display unit for inspection of the target object, the image processing apparatus including: a target image display means for displaying the image of the target object on the display unit; an image selection means for selecting, in accordance with a selection operation, all or part of the image of the target object displayed on the display unit; and a menu display means for displaying a menu image so as to be overlapped with the image of the target object in a translucent state, the menu image being made up of a plurality of parts that are partial images for displaying information or receiving an input operation, wherein the menu display means includes a display switching means for switching, in accordance with a switching instruction from the outside, the menu image displayed on the display unit between a first menu image of a first size and a second menu image of a second size that is different from the first size.

Preferably, the number of parts of the first menu image may be different from the number of parts of the second menu image.

Preferably, in accordance with the switching instruction, the display switching means switches between display and non-display for all of the parts of the menu image on the display unit. In other words, the number of parts of either the first or second menu image may be zero.

Preferably, in accordance with the switching instruction, the display switching means switches between display and non-display of the entirety of the menu image on the display unit. In other words, the size of either the first or second menu image may be zero.

Preferably, the image processing apparatus further includes: an instruction unit that is operated in order to give the switching instruction, wherein the instruction unit is fixedly displayed at a predetermined position in a screen of the display unit.

Preferably, the display unit and the image processing apparatus are configured integrally so as to be portable.

According to the present invention, a menu image made up of a plurality of parts that are partial images for displaying information or receiving an input operation is displayed overlapped with an image of a target object in a translucent state, and switching can be performed in accordance with a switching instruction from the outside so as to vary the size of the area occupied by the menu image on the display unit. This enables displaying an image without impairing visibility even on a display unit having a limited screen size. As a result, it is possible to obtain favorable operability even in the case of selecting all or part of the displayed image of the target object.

### BRIEF DESCRIPTION OF THE DRAWINGS

FIG. 1 is a schematic diagram showing an overall configuration of a visual sensor system according to an embodiment of the present invention;
FIG. 2 is a block configuration diagram of the visual sensor system according to the embodiment of the present invention;
FIG. 3 is a diagram schematically showing data exchanged between a display setting unit and the visual sensor according to the embodiment of the present invention;
FIG. 4 is a diagram showing an example of a configuration for performing image synthesis processing according to the embodiment of the present invention;
FIG. 5 is a flowchart of image processing in an adjustment mode according to the embodiment of the present invention;
FIGS. 6A and 6B are diagrams showing examples of display screens according to the embodiment of the present invention;
FIGS. 7A and 7B are diagrams showing examples of display screens according to the embodiment of the present invention;
FIGS. 8A and 8B are diagrams showing examples of display screens according to the embodiment of the present invention;
FIGS. 9A and 9B are diagrams showing examples of display screens according to the embodiment of the present invention;
FIGS. 10A to 10C are diagrams showing examples of display screens according to the embodiment of the present invention;
FIGS. 11A and 11B are diagrams showing examples of display screens according to the embodiment of the present invention;
FIG. 12 is a diagram showing an example of a display screen according to the embodiment of the present invention;
FIG. 13 is a diagram illustrating how the visual sensor according to the embodiment of the present invention is attached;
FIG. 14 is a diagram illustrating how a plurality of the visual sensors according to the embodiment of the present invention are attached;
FIG. 15 is a schematic diagram showing an overall configuration of a visual sensor system according to another embodiment of the present invention; and
FIG. 16 is a hardware configuration diagram of an image processing apparatus of the visual sensor system according to the other embodiment of the present invention.

### DETAILED DESCRIPTION

The following is a detailed description of embodiments of the present invention with reference to the drawings. Note that portions in the drawings that are the same or correspond to each other have been given the same reference signs, and redundant descriptions thereof will not be given.

Although an image processing apparatus is described below as a display setting unit integrally including a screen for display, there is no limitation to this. The screen for display may be provided separately. Also, although the image processing apparatus is provided separately from a visual sensor having an imaging unit for obtaining an input image, the image processing apparatus may be built into the visual sensor.

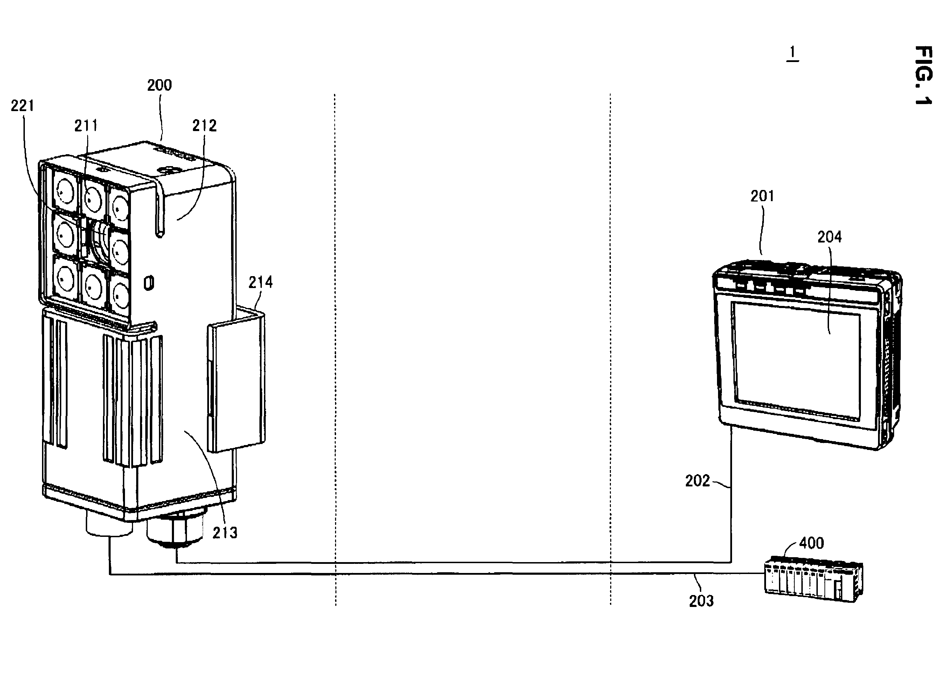

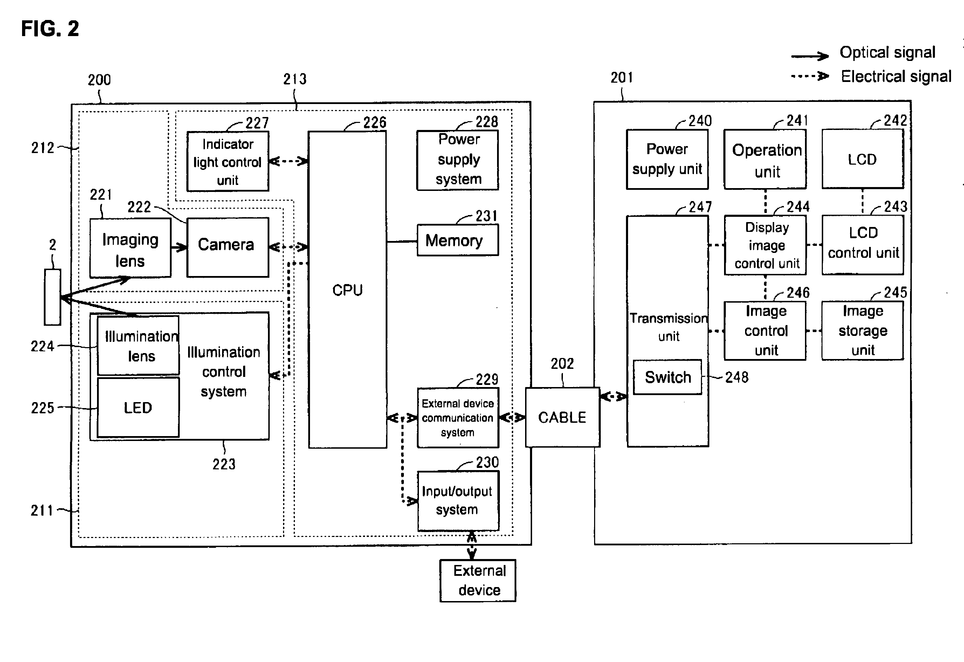

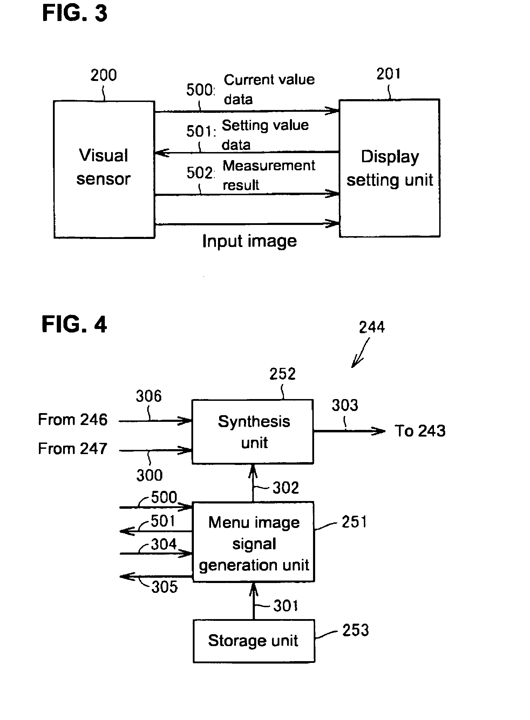

FIG. 1 is a schematic diagram showing an overall configuration of a visual sensor system including an image processing apparatus according to the present embodiment. FIG. 2 shows a configuration of a display setting unit and a visual sensor according to the present embodiment. FIG. 3 schematically shows data exchanged between the display setting unit and the visual sensor according to the present embodiment.

As shown in FIG. 1, in a visual sensor system 1 according to the present embodiment, a visual sensor 200 and a display setting unit 201 corresponding to the image processing apparatus are connected by a transmission cable 202 so as to be able to communicate with each other in accordance with a predetermined protocol. An IO cable 203 connects the visual sensor 200 and a PLC (Programmable Logic Controller) 400 so as to be able to communicable with each other. The PLC 400 performs overall control of the visual sensor system 1 by receiving signals from another apparatus and transmitting signals to the other apparatus.

A plurality of visual sensors 200 may be connected to the display setting unit 201 via the transmission cable 202 and a hub (not shown). A user can control image processing and image capture processing by transmitting data for image processing and image capture processing to the visual sensor 200 via the display setting unit 201. The display setting unit 201 can receive image processing results from the visual sensor 200 and display them.

The visual sensor 200 also receives a supply of power from an external power supply (not shown) via the IO cable 203.

The visual sensor system 1 is incorporated in a production line, for example. The visual sensor system 1 executes processing such as character recognition and imperfection inspection (hereinafter, also referred to as "inspection processing") based on an image obtained by imaging an inspection target (the later-described "workpiece 2").

The visual sensor 200 includes an imaging unit 212 and a controller unit 213, and the imaging unit 212 has an illumination unit 211 and an imaging lens 221. A microcomputer is built into the controller unit 213. The casing of the visual sensor 200 is provided with an attachment unit 214 for attaching the visual sensor 200 to a support member (not shown).

The display setting unit 201 has an LCD (Liquid Crystal Display) touch panel 204 that is configured by an LCD integrated with a touch panel for receiving an input of an operation instruction due to the LCD screen being touched by a finger or a special-purpose pen. The display setting unit 201 receives image data captured by the imaging unit 212 and displays the image data on the LCD touch panel 204, and also receives an input of an instruction given by a user operation from the LCD touch panel 204, and transmits the instruction to the controller unit 213 of the visual sensor 200.

Next is a description of communication data exchanged between the visual sensor 200 and the display setting unit 201 with reference to FIG. 3. The communication data includes data that is transmitted from the visual sensor 200 to the display setting unit 201, namely current value data 500 indicating the current values of various types of parameters related to inspection processing, inspection result data 502, and an input image that the imaging unit 212 obtains by capturing an image of the workpiece 2 and outputs. The communication data also includes data transmitted from the display setting unit 201 to the visual sensor 200, namely setting value data 501 that has been set for the various parameters related to inspection processing.

Next is a description of the configuration of the visual sensor 200 and the display setting unit 201 with reference to FIG. 2. The visual sensor 200 includes the illumination unit 211, the imaging unit 212 for capturing an image of the workpiece 2, and the controller unit 213. The imaging unit 212 has the imaging lens 221 and a camera 222.

The illumination unit 211 includes an illumination control system 223 that has an illumination lens 224 and an LED (Light Emitting Diode) 225 serving as the light source.

The controller unit 213 includes an indicator light control unit 227 that controls an indicator light (not shown) such as a lamp, a CPU 226 for controlling the visual sensor 200, a power supply system 228 for supplying power to various units, an external device communication system 229 that can be connected to the transmission cable 202, an input/output system 230 for inputting and outputting data from and to an external device, and a memory 231 for storing various types of data such as the current value data 500 for the various parameters related to images, inspection results, and image processing.

The display setting unit 201 includes a power supply unit 240 for supplying power to various units, an operation unit 241 such as a touch panel on which an operation is performed to input an instruction from the outside, an LCD 242, an LCD control unit 243 that controls the LCD 242, a display image control unit 244 that controls the display of images on the LCD 242 via the LCD control unit 243, an image storage unit 245 for storing images, an image control unit 246, and a transmission unit 247. The display setting unit 201 has a microcomputer for realizing the functionality of the LCD control unit 243, the display image control unit 244, the image control unit 246, and the like.

The transmission unit 247 is connected to the transmission cable 202 and includes a switch 248 for performing input switching. In the present embodiment, a plurality of visual sensors 200 can be connected to the display setting unit 201 via the transmission cable 202. The transmission unit 247 has a plurality of input ports for communicating with a plurality of visual sensors 200. The switch 248 selects one of the input ports in accordance with a command from the microcomputer. This enables the display setting unit 201 to communicate with the visual sensor 200 that is connected to the selected input port.

The display setting unit 201 has been made compact so as to be capable of being carried by a user who patrols a manufacturing line at a manufacturing site or the like, and therefore the screen size of the LCD 242 has also been reduced.

The LCD 242 displays images based on a control signal from the LCD control unit 243. Based on an image signal from the display image control unit 244, the LCD control unit 243 generates a control signal for controlling display processing performed by the LCD 242, and outputs the control signal to the LCD 242.

The operation unit 241 is realized by, for example, switches provided on the outer side of the casing of the display setting unit 201, and a tablet (not shown) that covers the surface of the LCD 242. The LCD 242 and the tablet configure a touch panel. The user inputs various types of instructions (or commands) to the display setting unit 201 via the switches and the touch panel.

The display image control unit 244 generates a synthesized image 303 based on an instruction signal 304 from the operation unit 241, an image 306 sent from the image control unit 246, an input image 300 received from the visual sensor 200 via the transmission unit 247, and the current value data 500, and outputs the synthesized image 303 to the LCD control unit 243.

The display image control unit 244 also receives an input of values based on the instruction signal 304 from the operation unit 241, and outputs the values to the transmission unit 247 as the setting value data 501. The setting value data 501 is transmitted to the visual sensor 200 via the transmission unit 247.

The image control unit 246 stores the input image received from the visual sensor 200 in the image storage unit 245. The image control unit 246 also reads out an image stored in the image storage unit 245, and outputs the readout image to the display image control unit 244. Accordingly, the transmission unit 247 may correspond to a target image display means for displaying the image of the target object on the display unit.

In the present embodiment, a display setting screen is displayed on the LCD 242 of the display setting unit 201 in order to display the current value data 500 related to items in inspection processing and allow the user to input the setting value data 501. The following is a detailed description of a method for generating the display setting screen.

FIG. 4 shows an example of the configuration of the display image control unit 244 according to the present embodiment. As shown in FIG. 4, the display image control unit 244 includes a menu image signal generation unit 251, a synthesis unit 252, and a storage unit 253.

In the present embodiment, the display setting screen is assumed to be made up of a plurality of setting screens in a hierarchy. The menu image signal generation unit 251 generates menu images 302 that are used in the setting screens. The menu images 302 are made up of a plurality of UI (User Interface) parts, which are partial images for displaying information such as various types of parameter values related to image processing for inspection processing and for receiving a user input operation. The parameter values are adjustable for each image processing item, and the UI parts include, for example, icons and checkboxes for selecting processing items whose parameter values are to be adjusted among the image processing items, and textboxes and slide bars for the input of parameter values. When a UI part corresponding to one of the processing items is designated and an operation is performed thereon, the menu image 302 of the next rank in the hierarchy for setting a parameter value for the processing item corresponding to the designated UI part is generated, and a synthesized image 303 generated using that menu image 302 is displayed.

The menu image signal generation unit 251 generates a menu image signal based on information 301 related to the type and location of the UI part read out from the storage unit 253, the instruction signal 304 output from the operation unit 241, and the current value data 500 read out from the memory 231 of the visual sensor 200, and outputs the generated menu image 302 to the synthesis unit 252.

The synthesis unit 252 receives an input of the images 300 or 306 sent in units of frames and the menu image 302 output from the menu image signal generation unit 251. The synthesis unit 252 synthesizes the menu image 302 in units of frames so as to be superimposed on the images 300 or 306, and outputs synthesized images 303 that have been synthesized in units of frames. The menu image 302 sent to the synthesis unit 252 corresponds to an input image received from the visual sensor 200 that was obtained by imaging the workpiece 2, or a captured image of the workpiece 2 that was read out from the image storage unit 245 of the image control unit 246. Note that the synthesis unit 252 outputs the images 300 or 306 as they are if the menu image 302 has not been sent. Accordingly, in this case, the synthesized images 303 correspond to the images 300 or 306.

The LCD control unit 243 receives an input of the synthesized image 303 from the display image control unit 244, generates a control signal for displaying the synthesized image 303, and controls the LCD 242 using the generated control signal. Accordingly, the synthesized image 303 is displayed on the screen of the LCD 242 while being updated in units of frame.

Here, the menu image signal generation unit 251 and the synthesis unit 252 of the present embodiment variably set parameter values indicating the transparency of each pixel of the menu image 302 when synthesis is performed. The parameter values are, for example, α (alpha) values in α blend processing related to image transparency processing.

A pixel becomes opaque if the parameter value is set to the maximum value, becomes transparent if the parameter value is set to "0", and becomes translucent if the parameter value is set to an intermediate value therebetween. Since the pixels of the menu image 302 to be displayed by the LCD 242 are set to be translucent, the menu image 302 is displayed superimposed on the image 300 in a translucent state. Accordingly, the user can check the current values of the various parameters related to inspection processing and set such values while checking the image 300 displayed under the menu image 302. Thus, the display image control unit 244 may correspond to a menu display means for displaying a menu image so as to be overlapped with the image of the target object in a translucent state, the menu image being made up of a plurality of parts that are partial images for displaying information or receiving an input operation.

The visual sensor system 1 of the present embodiment has various operating modes, including an adjustment mode in which the values of the various parameters related to inspection processing are set by being adjusted, and an operation mode in which the workpieces 2 on the manufacturing line are subjected to inspection processing. Images (including synthesized images) are displayed by the display setting unit 201 in both the adjustment mode and the operation mode. Although a description of image processing in the adjustment mode is given below, the switching of menu images described below can be similarly applied in the operation mode as well.

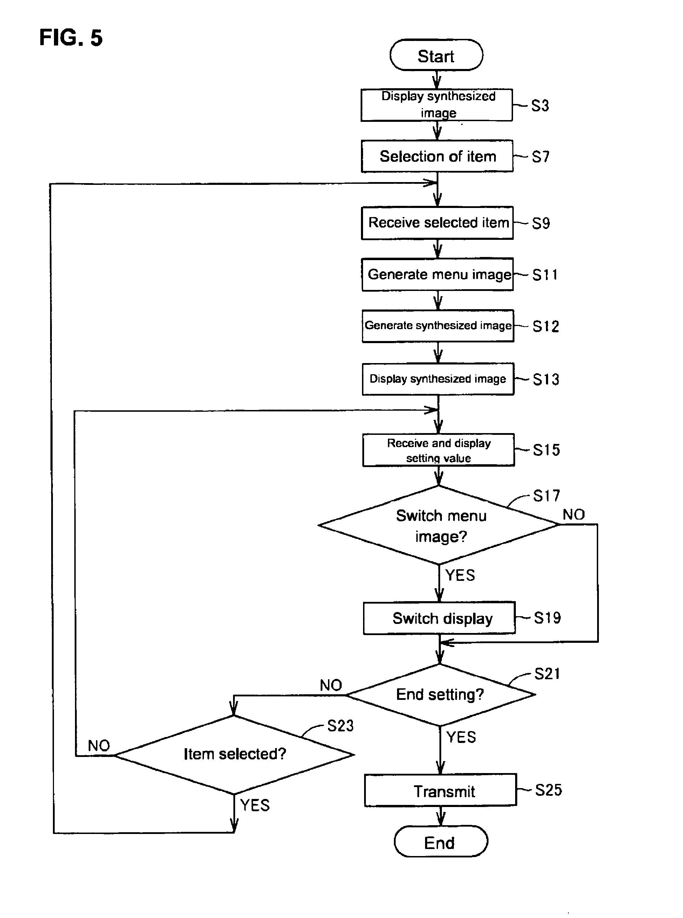

FIG. 5 shows a flowchart of image processing performed by the display setting unit 201 in the adjustment mode according to the present embodiment. The following describes an image processing procedure of the present embodiment with reference to FIG. 5. Note that the image 300 may be replaced with the image 306 in the following description.

When the adjustment mode starts, the synthesized image 303 generated by the menu image 302 of the highest rank in the hierarchy being superimposed on the image 300 is displayed on the LCD 242 (step S3).

When the synthesized image 303 is displayed, the user selects an item whose parameter value is to be set by operating the operation unit 241 (step S7). The menu image signal generation unit 251 receives an input of the instruction signal 304 corresponding to the selected item (step S9), and generates and outputs the menu image 302 of the next rank in accordance with the received instruction signal 304 (step S11). The synthesis unit 252 generates the synthesized image 303 by superimposing the menu image 302 of the next rank onto the image 300, and outputs the synthesized image 303 (step S12). Accordingly, the LCD 242 displays the synthesized image 303 in accordance with a control signal generated by the LCD control unit 243 (step S13).

The user inputs a setting value for any of the various parameters by operating the operation unit 241 with use of a UI part in the synthesized image 303.

The instruction signal 304 related to the setting value that was input is sent to the menu image signal generation unit 251, and thereafter the menu image signal generation unit 251 generates and outputs a menu image 302 in accordance with the instruction signal 304. Accordingly, the synthesized image 303 on the LCD 242 is updated to a synthesized image 303 in which a value, data, or the like is displayed in the UI part based on the instruction signal 304, and the updated synthesized image 303 is displayed (step S15). Note that the setting value that was input and determined is stored as the setting value data 501 in a memory area (not shown) associated with the menu image signal generation unit 251.

The menu image signal generation unit 251 determines whether the instruction signal 304 instructing a switch between a menu image 302 (first menu image) that occupies a large area in the synthesized image 303 and a menu image 302 (second menu image) that occupies a small area in the synthesized image 303, has been sent via the operation unit 241 (step S17). Accordingly, the menu image signal generation unit 251 may correspond to a display switching means for switching, in accordance with a switching instruction from the outside, the menu image displayed on the display unit between a first menu image of a first size and a second menu image of a second size that is different from the first size. This switching of the menu image 302 will be described later.

If it has been determined that the instruction signal 304 for switching the menu image 302 has not been sent (NO in step S17), processing moves to the later-described step S21, and if it has been determined that the instruction signal 304 has been sent (YES in step S17), display switching processing is performed (step S19).

Each time the instruction signal 304 for switching has been sent, the menu image signal generation unit 251 operates so as to store the instruction signal 304. Accordingly, in the display switching processing, it is possible to determine, based on the stored instruction signal 304, whether the occupied area of the menu image 302 currently synthesized in the synthesized image 303 is large or small, i.e. whether the first or the second menu image is displayed.

Using the operation unit 241, the user performs a setting end operation if the user desires to end the setting of the parameter value using the UI part in the displayed menu image 302, or the user performs an operation for selecting an item in the menu image 302. The instruction signal 304 indicating the operation content is output to the menu image signal generation unit 251.

If the menu image signal generation unit 251 determines that setting is to be ended based on the instruction signal 304 (YES in step S21), the menu image signal generation unit 251 reads out and outputs the setting value data 501 from the memory area. Accordingly, the setting value data 501 is transmitted to the visual sensor 200 via the transmission unit 247 (step S25). The CPU 226 of the visual sensor 200 stores the received setting value data 501 in the memory 231 as the current value data 500. Thereafter, in inspection processing using a captured image obtained by the imaging unit 212, processing is executed using the current value data 500 that was read out from the memory 231.

If the menu image signal generation unit 251 determines that an item was selected based on the instruction signal 304 (NO in step S21, and furthermore YES in step S23), processing returns to step S9, and subsequent processing is performed in a similar manner for the selected item.

If the menu image signal generation unit 251 determines, based on the instruction signal 304, that the end of setting has not been instructed, and further an item has not been selected (NO in step S21, and NO in step S23), processing returns to step S15, and processing for inputting a setting value in the currently displayed menu image 302 continues.

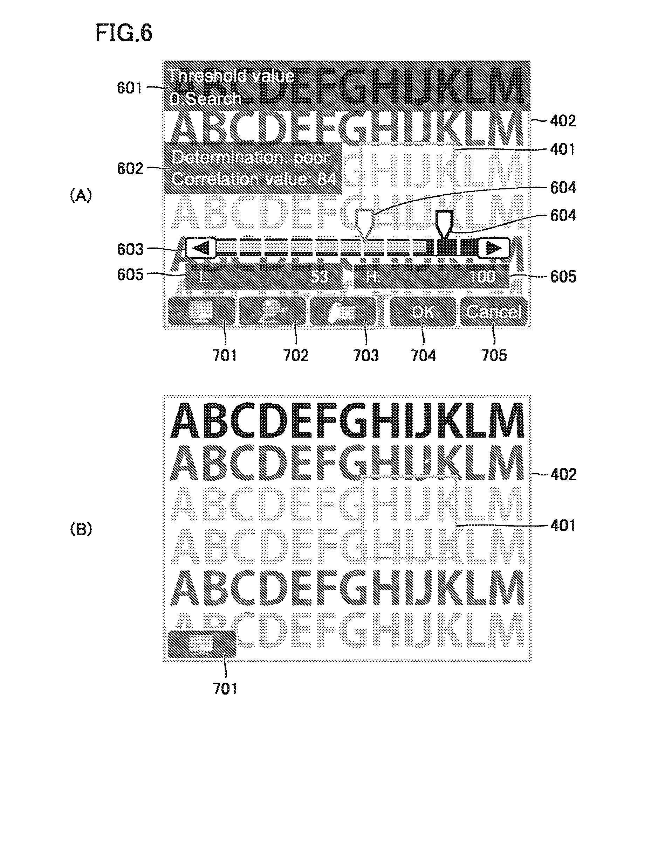

Next is a description of examples of the display image displayed on the LCD 242 in accordance with the above-described processing procedure shown in FIG. 5, with reference to FIGS. 6 to 12. In these drawings, it is assumed that the menu image 302 is displayed synthesized with the image 300, which is an enlarged image of the surface (characters) of the workpiece 2.

FIGS. 6A and 6B show setting screens for setting a threshold value for a good/poor determination in inspection processing. The image 300 is displayed over the entirety of the screen of the LCD 242, and an inspection area frame 402 indicating the inspection range is set to the entirety of the image 300 by default. Also, a model area frame 401 input by the user by operating the operation unit 241 is displayed as a graphic in the image 300. The model area frame 401 indicates the area of a partial image that is to serve as a reference (model) for inspection processing. Accordingly, the operation unit 241 may constitute, or be part of, an image selection means for selecting, in accordance with a selection operation, all or part of the image of the target object displayed on the display unit.

The menu image 302 displayed in FIG. 6A is made up of UI parts such as character string information display units 601 and 602, common buttons 701 to 703, a determine button 704, and a cancel button 705. The character string information display unit 601 is always arranged at the top of the screen and displays information such as the content of setting items and the setting screen being displayed, setting values, and user guidance. The common buttons 701 to 703 are always arranged at the bottom of the screen and are displayed for providing functions common to each of the menu images 302. Since the UI parts constituting the menu image 302 are transparent images, the menu can be operated while checking the image 300.

The common button 701 is an example of an icon and is operated in order to input an instruction for switching the menu image 302. The common button 701 is displayed fixed at a predetermined position (the bottom left of the screen in the present embodiment) in all of the screens that are displayed by switching, and therefore the user is not likely to lose sight of the common button 701 even if the screen is switched.

The common button 702 is operated in order to change how the image 300 is displayed (e.g., enlarged or reduced). The common button 703 is operated in order to execute screen capturing. The determine button 704 and the cancel button 705 are displayed at the bottom of the screen and are operated in order to determine/cancel setting value data 501 that was input via the menu image 302. If the determine operation has been performed, setting values that were input via the menu image 302 are determined and stored as the setting value data 501 in the memory area associated with the menu image signal generation unit 251, and the setting screen is changed to a higher ranking screen. On the other hand, if the cancel operation has been performed, setting values that were input via the menu image 302 are canceled, and the setting screen is changed to a higher ranking screen.

In the display state of FIG. 6A, if the common button 701 is operated, the UI parts and the like of the menu image 302 are hidden except for the common button 701 (see FIG. 6B). At this time, the model area frame 401 and the inspection area frame 402 continue to be displayed. If the common button 701 in FIG. 6B is operated, the original UI parts of the menu image 302 are again displayed superimposed on the image 300 (see FIG. 6A).

Note that the UI parts 602 to 605 in FIG. 6A are display units for displaying threshold values (correlation values with respect to a model and a captured image, and the type of determination) indicated by the current value data 500 for performing inspection processing using the partial image (model) inside the model area frame 401, and slide bars and text boxes for the numerical input of threshold values that are operated via the operation unit 241 for setting the correlation value.

In the present embodiment, the common button 701 is displayed in the synthesized image 303, and the menu image 302 can be switched by operating the common button 701, and the same follows for all synthesized images 303.

As described above, switching the menu image 302 enables changing the number of UI parts in the menu image 302 superimposed on the image 300, that is to say, enables changing the amount of area occupied by the menu image 302 superimposed on the image 300. Accordingly, by switching to a menu image 302 that occupies less area, the user can more easily check the entire area of the image 300 and make designations.

Also, a configuration is possible in which by enlarging/reducing the UI parts in the displayed menu image 302 by operating the common button 701, the size of the area occupied by the menu image 302 superimposed on the image 300 is changed while maintaining the same number of displayed UI parts.

Note that the operation unit for instructing switching of the menu image 302 is not limited to being the common button 701 that is displayed. An operation switch provided on the casing of the display setting unit 201 or the like may be used instead of the common button 701. In this case, displaying and not displaying the menu image 302 superimposed on the image 300 is switched in conjunction with the operation of the operation switch.

Also, a configuration is possible in which, when the menu image 302 has been switched to occupy a small area, the transparency of the common button 701 is increased, or the position of the common button 701 can be changed by a so-called drag-and-drop operation. Also, a configuration is possible in which the common button 701 is not displayed, and switching to the screen in which the menu image 302 is displayed is performed by so-called double-tapping the touch panel made up of the LCD 242 and the tablet. This enables the user to check the entire region of the synthesized image 303 and make designations without being hindered by the common button 701.

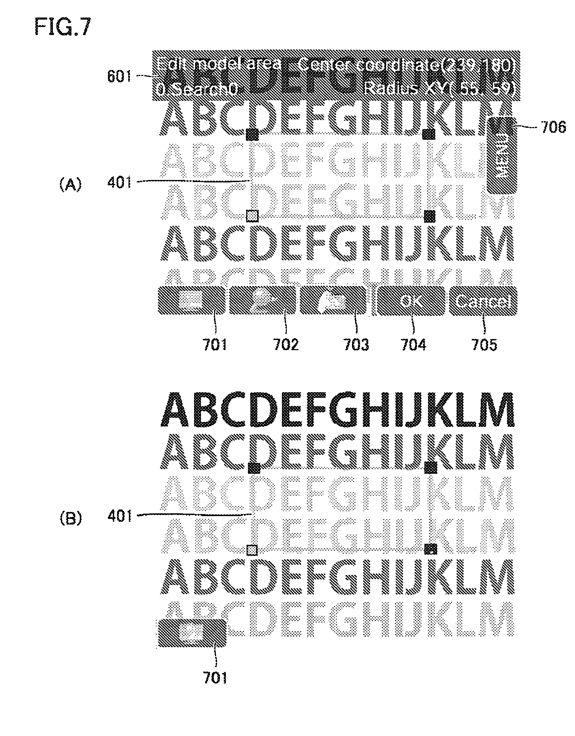

Next is a description of editing of the model area frame 401 with reference to FIGS. 7A and 7B. FIG. 7A shows a common button 706 that is operated in order to display various types of setting item selection buttons for model area editing. Specific examples of the selection buttons displayed when the common button 706 has been operated will be described later.

In the case of performing editing such as changing the size or position of the model area frame 401, editing can be performed easier if the entirety of the image 300 is displayed. In view of this, by cancelling the display of the UI parts of the menu image 302 (note that the common button 701 remains displayed) through operating the common button 701 (see FIG. 7B), the model area frame 401 becomes easier to edit.

In this way, in the case of selecting part or the entirety of the displayed image 300 as an area for inspection processing (the model area or the like), the entirety of the image 300 can be checked by hiding the UI parts of the menu image 302 through operating the common button 701, thus facilitating the selection of an area. Also, since the menu image 302 is displayed superimposed on the image 300 in a translucent state, a portion of the image 300 that is overlapped with the UI parts of the menu image 302 can also be selected as the model area frame 401.

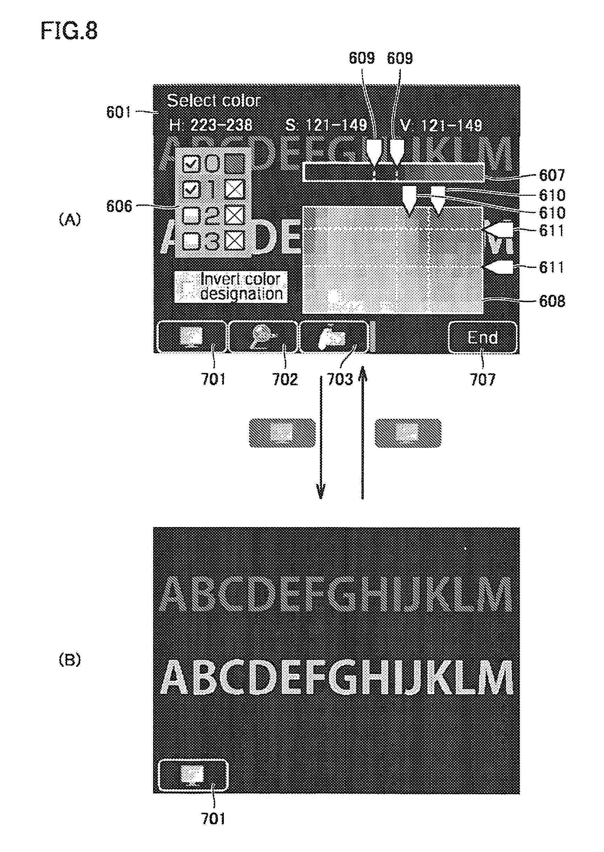

FIGS. 8A and 8B show examples of display screens for setting parameter values related to color extraction in image processing. In the case of color extraction, the menu image 302 displayed superimposed on the image 300 includes UI parts 606 to 611 for selecting the color of an area to be extracted from the image 300. Also displayed is a common button 707 that is operated in order to instruct the end of the setting of parameter values related to color extraction.

The UI part 606 shows checkboxes for selecting colors that are to be extracted. The UI part 608 indicates a color palette for color section. The color palette for color section is provided with the UI parts 610 that can slide in the horizontal direction of the screen and the UI parts 611 that can slide in the vertical direction of the screen. Sliding the UI parts 610 enables setting the degree of hue, and sliding the UI parts 611 enables setting the degree of saturation. Furthermore, operating the UI parts 609 (sliders) provided on the UI part 607 (slide bar) enables setting the color value.

The character string information display unit 601 displayed at the top of the screen displays values (H: hue, S: saturation, and V: value) that are set by sliding the UI parts described above, and these values change in conjunction with the sliding.

If parameter values for color extraction are set via the UI parts of the menu image 302, the set values are read out by the display image control unit 244 as UI setting values 305. The image control unit 244 extracts areas including the designated colors indicated by the UI setting values 305 from the image 300, and generates an image 306 in which only the extracted color area portions remain. The generated image 306 is sent to the synthesis unit 252 in place of the image 300.

Accordingly, since the menu image 302 is displayed superimposed on the image 306 obtained using the parameter values set via the UI parts, the user can set parameter values as well as check the result of image processing performed using the set parameter values.

At this time, by cancelling the display of the UI parts of the menu image 302 (note that the common button 701 remains displayed) through operating the common button 701 (see FIG. 8B), the entirety of the image 306 resulting from image processing can be checked.

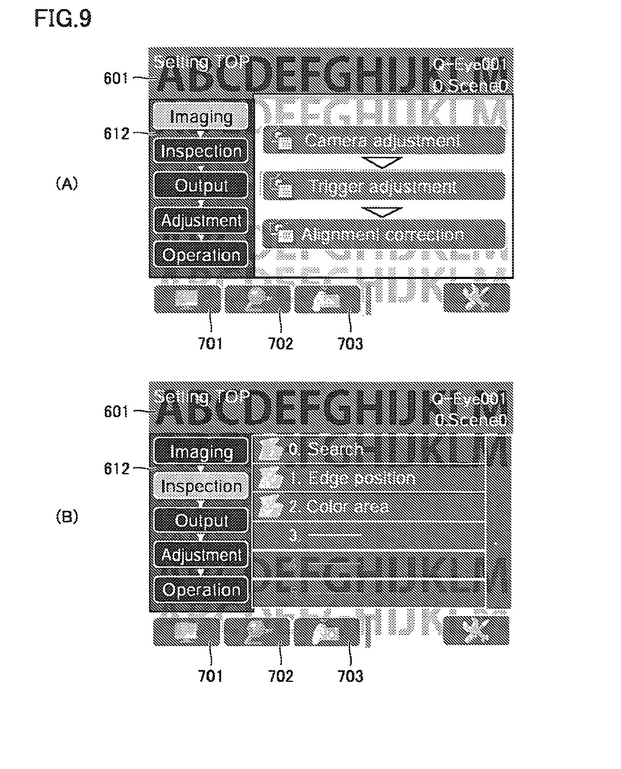

FIGS. 9 to 12 show other screens displayed in the adjustment mode. Since the common button 701 is displayed in these screens as well, the menu image 302 can be easily switched between occupying a large area and occupying a small area.

FIG. 9A shows a high ranking menu image 302 in the adjustment mode. In FIG. 9A, a UI part 612 at the left end of the menu image 302 shows an item menu showing functions of the display setting unit 201. In FIG. 9A, if "Imaging" in the operation item menu has been selected, selection buttons for "Camera adjustment", "Trigger adjustment", and "Alignment correction", which are setting items for imaging, are displayed on the right side of the screen in the order in which setting needs to be performed.

FIG. 9B shows an example of a display in the case where "Inspection" in the operation item menu of the UI part 612 has been selected, in which a list of functions used for inspection are displayed on the right side of the screen in a menu format.

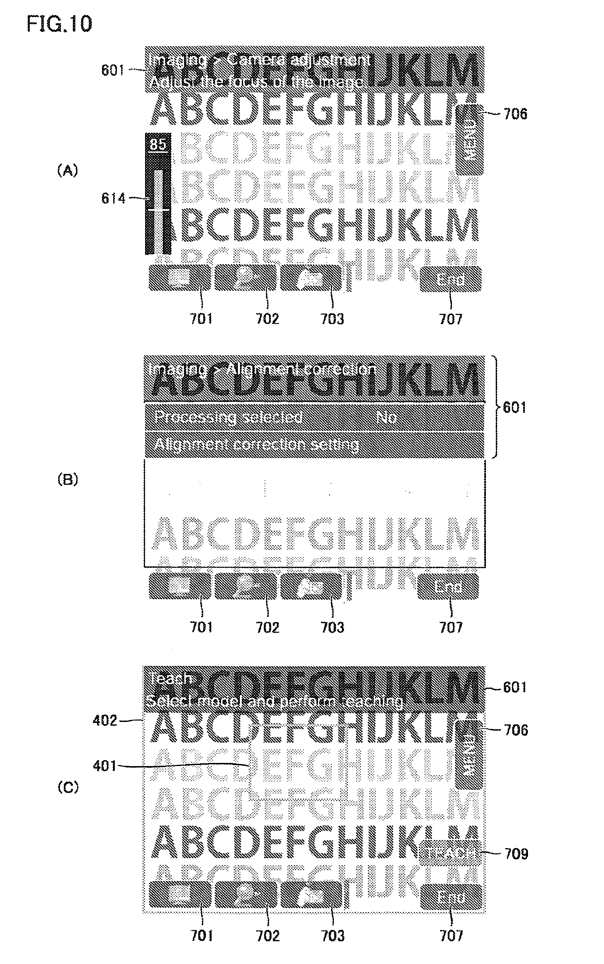

If "Camera adjustment" has been selected in the setting item menu displayed on the right side of the screen in FIG. 9A, the menu image 302 shown in FIG. 10A is displayed. A UI part 614 in FIG. 10A is for displaying a number indicating the focus value in the image 300 (in FIG. 10A, the value 85), and a corresponding bar graph. The focus value shows the degree to which the focal point of the imaging unit 212 coincides with the imaging subject such as a workpiece, and the focus value changes in conjunction with focus adjustment operations performed by the visual sensor 200. Note that since the focus value correlates with the quantity of edges that appear in the input image, the focus value can be calculated based on, for example, color deviation included in the input image.

FIG. 10B shows an example of the menu image 302 displayed if "Alignment correction" has been selected in the subordinate function menu shown in FIG. 9A. In FIG. 10B, the character string information display unit 601 shows whether processing for correcting the alignment of the imaging unit 212 is selected, and the fact that it is the alignment correction setting.

If "Alignment correction setting" was selected in FIG. 10B, the menu image 302 shown in FIG. 10C is displayed. In FIG. 10C, a UI part 709 for selecting the execution of teach processing for alignment correction is displayed. In teach processing, processing for registering the model area frame 401 and the inspection area frame 402 that have been set is performed (i.e., processing for storage in a predetermined storage area of the display setting unit 201, or processing for transmission to the visual sensor 200 and storage in a predetermined storage area).

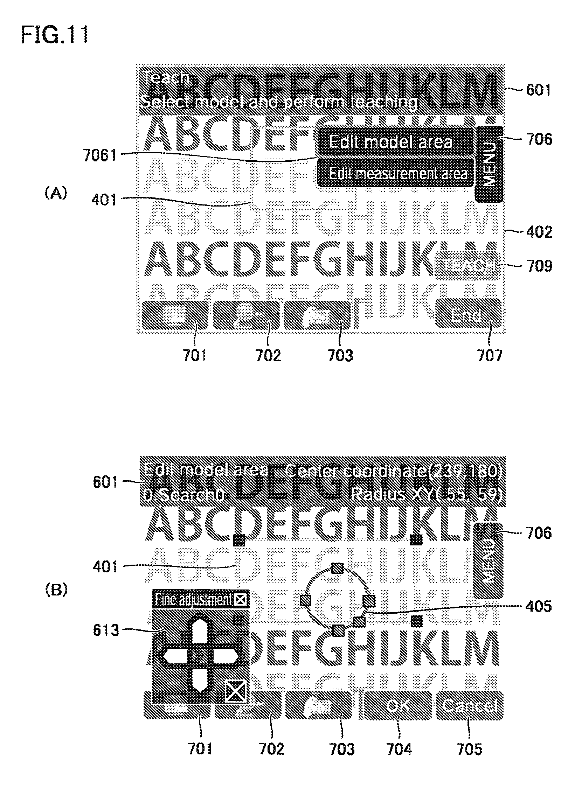

If the common button 706 in FIG. 10C is operated, a setting item selection button 7061 is displayed as shown in FIG. 11A. Here, if "Edit model area" is selected, the menu image 302 shown in FIG. 11B is displayed, and the model area to be used in alignment correction processing can be set. The model area frames 401 and 405 have been set in FIG. 11B. The position and size of the set model area is detected and displayed in the character string information display unit 601. Also, the position and size of the model area frame 401 and 405 on the image 300 can be changed by operating the UI part 613.

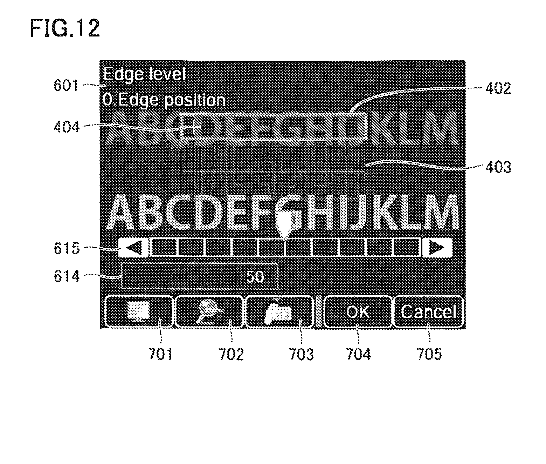

FIG. 12 shows an example of the menu image 302 displayed if "Edge position" was selected in the function menu shown in FIG. 9B.

An image edge level is set in the screen shown in FIG. 12. UI parts 614 and 615 for setting the level according to which edges are to be extracted from the image 300, as well as an edge graphic 403 are displayed in FIG. 12. In the edge graphic 403, the edge level in the inspection area frame 402 is detected, position in the image 300 is plotted on the horizontal axis of the graph, and edge level is plotted on the vertical axis.

The edge graphic 403 is generated by the image control unit 246 performing edge detection based on the brightness component level of each pixel in the image 300. The generated edge graphic 403 is displayed superimposed on the image 300.

The UI part 615 (slider) is displayed in association with the edge graphic 403. By operating the slider, the user can determine a desired edge level threshold value while referencing the edge graphic 403. Note that the detected edge position is shown by a cross mark 404.

While the slide operation is performed, the set threshold value is numerically displayed in the numerical value input box of the UI part 614 while being sequentially updated in conjunction with the slide operation.

In the above-described screens of FIGS. 9 to 12 as well, the entirety of the image 300 targeted for processing is displayed, and the menu image 302 including translucent UI parts is displayed superimposed on the image 300, and in such a screen, switching of the UI parts of the menu image 302 can be performed by operating the common button 701.

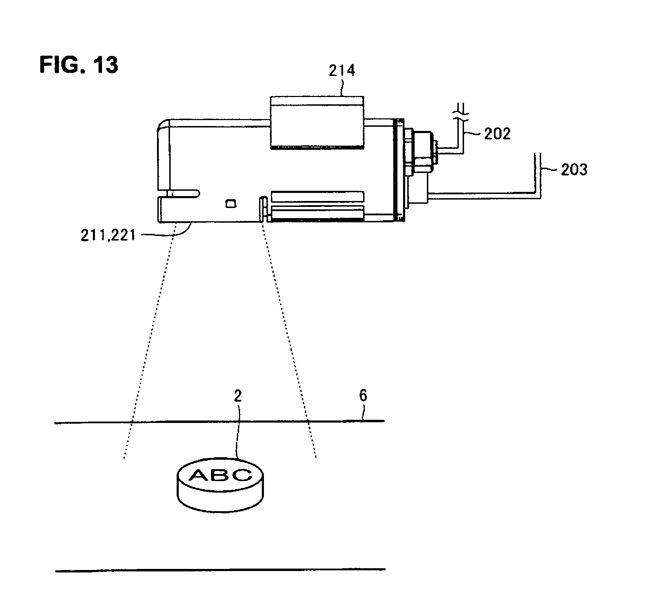

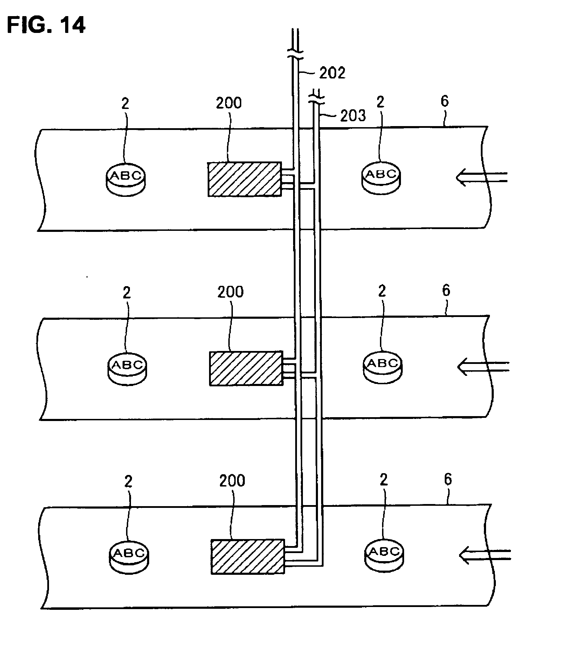

FIG. 13 shows an example of how the visual sensor 200 is attached. FIG. 14 shows a state in which visual sensors 200 are respectively attached to conveying lines of belt conveyors or the like, which are a plurality of conveying mechanisms 6 (the arrow in the figure indicates the conveying direction), as viewed from above the conveying lines. In FIG. 13, the visual sensor 200 corresponding to each line is attached to a support member (not shown) via the attachment unit 214 such that the imaging range of the camera 222 is aligned with the conveying line. When imaging is performed, illumination light is irradiated toward the conveying line of the conveying mechanism 6, thus securing illumination in the imaging range. The visual sensors 200 provided for the conveying lines exchange inspection processing result information, information for inspection processing including the current value data 500, and the like with each other via the transmission cable 202.

### Other Embodiments

Although the imaging function and the image processing function for inspection processing are provided integrally in the visual sensor 200 in the above-described embodiment, these functions may be provided separately and independently as shown in the present embodiment.

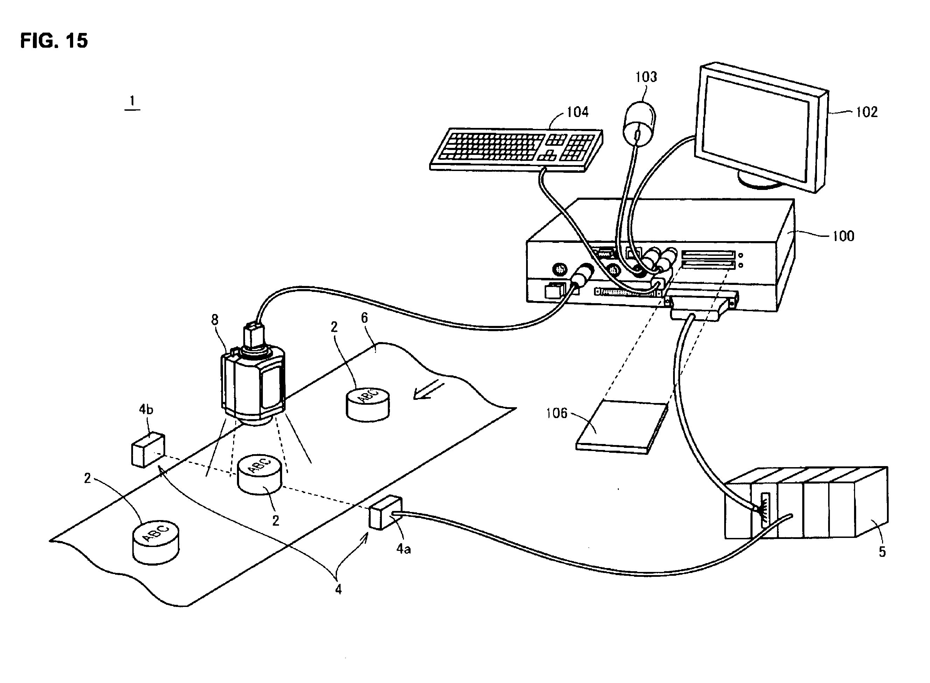

As shown in FIG. 15, in a visual sensor system 1 according to another embodiment that is incorporated in an FA production/manufacturing line or the like, workpieces 2 that are objects to be subjected to measurement are conveyed in the arrow direction in FIG. 15 by a conveying mechanism 6 such as a belt conveyor, and the workpieces 2 are successively imaged by an imaging apparatus 8 in order to perform inspection processing on the workpieces 2. Image data obtained by the imaging apparatus 8 (hereinafter, also referred to as "input images") are transmitted to an image processing apparatus 100. Note that it is possible to further provide an illumination mechanism that emits light onto the workpieces 2 that are imaged by the imaging apparatus 8.

A photoelectric sensor 4 made up of two parts disposed on respective sides of the conveying mechanism 6 detects the fact that a workpiece 2 has arrived at the imaging range of the imaging apparatus 8. Specifically, the photoelectric sensor 4 includes a photoreception unit 4a and a photoemission unit 4b disposed on the same optical axis. The photoreception unit 4a detects the fact that light emitted from the photoemission unit 4b is blocked by the workpiece 2, thus detecting the arrival of the workpiece 2. A detection signal (hereinafter, also referred to as a "trigger signal") from the photoelectric sensor 4 is output to a PLC 5.

The PLC 5 receives the trigger signal from the photoelectric sensor 4 or the like, and performs control of the conveying mechanism 6.

The visual sensor system 1 in FIG. 15 further includes the image processing apparatus 100, a display 102, and a keyboard 104. The image processing apparatus 100 is connected to the PLC 5, the imaging apparatus 8, the display 102, and the keyboard 104.

The image processing apparatus 100 has various types of operating modes, namely an operation mode for executing inspection processing on the workpieces 2, and the above-described adjustment mode. In the operation mode, the image processing apparatus 100 gives an imaging command to the imaging apparatus 8 upon receiving the trigger signal from the photoelectric sensor 4 via the PLC 5. In response to the imaging command, the imaging apparatus 8 transmits an input image obtained by capturing an image of the workpiece 2 to the image processing apparatus 100. As an alternative processing method, a configuration is possible in which the imaging apparatus 8 is caused to continuously perform imaging, and the image processing apparatus 100 obtains only necessary input images in response to receiving the trigger signal.

The imaging apparatus 8 is configured by, for example, an optical system such as a lens, and an imaging element partitioned into a plurality of pixels, such as a CCD (Charged Coupled Device) or a CMOS (Complementary Metal Oxide Semiconductor) sensor. The imaging apparatus 8 is assumed to be attached such that its installation location, which determines the imaging range, can be changed manually.

The image processing apparatus 100 is a computer having a general-purpose architecture, and provides various types of functions by executing a pre-installed program.

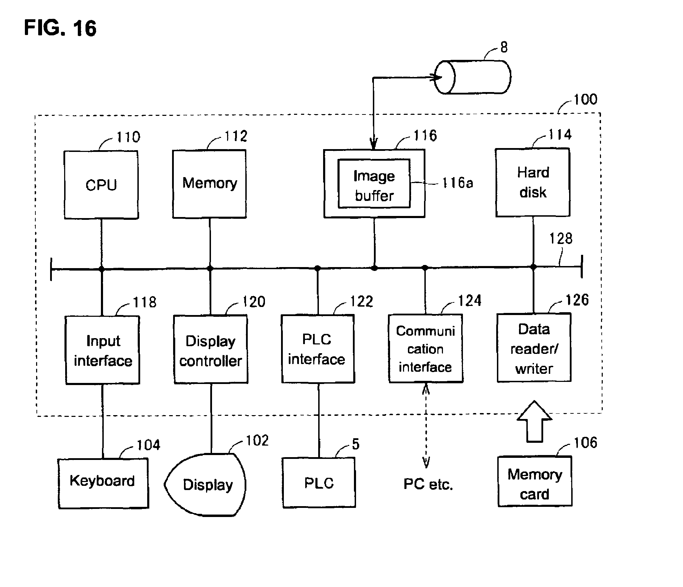

FIG. 16 is a schematic configuration diagram showing the image processing apparatus 100 according to this other embodiment of the present invention. As shown in FIG. 16, the image processing apparatus 100 includes a CPU 110, which is an arithmetic processing unit, a memory 112 and a hard disk 114, which are storage units, a camera interface 116, an input interface 118, a display controller 120, a PLC interface 122, a communication interface 124, and a data reader/writer 126. These units are connected via a bus 128 such that data can be exchanged therebetween.

The CPU 110 performs various types of computation for processing in the operation mode and the above-described adjustment mode by deploying programs (code) stored in the hard disk 114 to the memory 112 and executing the programs in a predetermined sequence.

The camera interface 116 mediates the transmission of data between the CPU 110 and the imaging apparatus 8. More specifically, the camera interface 116 includes an image buffer 116a that can be connected to one or more imaging apparatuses 8 and is for temporarily accumulating image data from the imaging apparatuses 8. When at least one frame-worth of input image data has been accumulated in the image buffer 116a, the camera interface 116 transfers the accumulated data to the memory 112.

The memory 112 stores image data in units of image files. In the case of performing processing on an input image, the CPU 110 reads out an image file from the memory 112.

The camera interface 116 gives an imaging command to the imaging apparatus 8 in accordance with an internal command issued by the CPU 110.

The input interface 118 mediates the transmission of data between the CPU 110 and input apparatuses such as the keyboard 104, a mouse 103, and a touch panel (not shown). Specifically, the input interface 118 receives an operation command given by the user operating an input apparatus.

The display controller 120 is connected to the display 102, which is a typical example of a display apparatus, and notifies the user of, for example, results of image processing performed by the CPU 110.

The PLC interface 122 mediates the transmission of data between the CPU 110 and the PLC 5. More specifically, the PLC interface 122 transmits, to the CPU 110, information regarding the state of the production line controlled by the PLC 5, information regarding the workpiece, and the like.

The communication interface 124 mediates the transmission of data between the CPU 110 and another personal computer, a server apparatus, or the like, which are not shown. The communication interface 124 is typically an Ethernet (registered trademark) interface, a USB (Universal Serial Bus) interface, or the like. Note that as will be described later, as an alternative to the embodiment in which a program stored on the memory card 106 is installed in the image processing apparatus 100, an embodiment is possible in which a program downloaded from a distribution server (not shown) or the like via the communication interface 124 is installed in the image processing apparatus 100.

The data reader/writer 126 mediates the transmission of data between the CPU 110 and the memory card 106, which is a storage medium.

In the visual sensor system 1 shown in FIGS. 15 and 16, the display 102 corresponds to the LCD 242 in FIG. 2, and the above-described functions of the display setting unit 201 in the adjustment mode are executed based on control performed by the CPU 110 of the image processing apparatus 100. Accordingly, even with the configuration shown in FIGS. 15 and 16, parameter values for inspection processing can be set while the menu image 302 is displayed superimposed on the processing target image 300 in a translucent state, and the menu image 302 can be switched by operating the common button 701. This enables obtaining favorable operability with respect to the setting of parameter values while checking the image 300.

The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

### INDEX TO THE REFERENCE NUMERALS

1 ... visual sensor system, 2 ... workpiece, 8 ... imaging apparatus, 100 ... image processing apparatus, 102 ... display, 200 ... visual sensor, 201 ... display setting unit, 202 ... transmission cable, 251 ... menu image signal generation unit, 252 ... synthesis unit.

## Claims

1. An image processing apparatus (100) for processing an image of a target object (2) while displaying the image of the target object (2) on a display unit (102) for inspection of the target object (2), the image processing apparatus (100) comprising:
a target image display means (247) for displaying the image of the target object (2) on the display unit (102);
an image selection means (241) for selecting, in accordance with a selection operation, all or part of the image of the target object (2) displayed on the display unit (102); and
a menu display means (244) for displaying a menu image so as to be overlapped with the image of the target object (2) in a translucent state, the menu image being made up of a plurality of parts that are partial images for displaying information or receiving an input operation,
wherein the menu display means (244) includes a display switching means (251) for switching, in accordance with a switching instruction from the outside, the menu image displayed on the display unit (102) between a first menu image of a first size and a second menu image of a second size that is different from the first size.

2. The image processing apparatus (100) according to claim 1, wherein the number of parts of the first menu image is different from the number of parts of the second menu image.

3. The image processing apparatus (100) according to claim 2, wherein in accordance with the switching instruction, the display switching means (251) switches between display and non-display for all of the parts of the menu image on the display unit (102).

4. The image processing apparatus (100) according to claim 2, wherein in accordance with the switching instruction, the display switching means (251) switches between display and non-display of the entirety of the menu image on the display unit (102).

5. The image processing apparatus (100) according to any of claims 1 to 4, further comprising:
an instruction unit that is operated in order to give the switching instruction,
wherein the instruction unit is fixedly displayed at a predetermined position in a screen of the display unit (102).

6. The image processing apparatus (100) according to any of claims 1 to 5, wherein the image selection means (241) can select a portion of the image of the target object (2) that is overlapped with any of the plurality of parts.

7. The image processing apparatus (100) according to any of claims 1 to 6, wherein the display unit (102) and the image processing apparatus are configured integrally so as to be portable.

## Patentansprüche

1. Bildverarbeitungsvorrichtung (100) zum Verarbeiten eines Bildes eines Zielobjekts (2) während das Bild des Zielobjekts (2) auf einer Anzeigeeinheit (102) zur Überprüfung des Zielobjekts (2) angezeigt wird, wobei die Bildverarbeitungsvorrichtung (100) Folgendes aufweist:
Zielbildanzeigemittel (247) zur Anzeige des Bildes des Zielobjekts (2) auf der Anzeigeeinheit (102);
Bildauswahlmittel (241) zur Auswahl, in Übereinstimmung mit einer Auswahlbedienung, des gesamten oder eines Teils des Bildes des auf der Anzeigeeinheit (102) angezeigten Zielobjekts (2); und
Menüanzeigemittel (244) zur Anzeige eines Menübildes in durchscheinender Weise überlappend mit dem Bild des Zielobjekts (2), wobei das Menübild aus mehreren Teilen aufgebaut ist, die Teilbilder für die Anzeige von Informationen oder den Empfang einer Eingabebedienung sind;
wobei die Menüanzeigemittel (244) Anzeigeumschaltmittel (251) aufweist zum Umschalten, in Übereinstimmung mit einer Umschaltanweisung von außerhalb, des auf der Anzeigeeinheit (102) angezeigten Menübildes zwischen einem ersten Menübild mit einer ersten Größe und einem zweiten Menübild mit einer zweiten Größe, die sich von der ersten Größe unterscheidet.

2. Bildverarbeitungsvorrichtung (100) gemäß Anspruch 1, wobei die Anzahl der Teile des ersten Menübildes sich von der Anzahl der Teile des zweiten Menübildes unterscheidet.

3. Bildverarbeitungsvorrichtung (100) gemäß Anspruch 2, wobei, in Übereinstimmung mit der Umschaltanweisung, die Anzeigeumschaltmittel (251) zwischen Anzeige und Nicht-Anzeige aller Teile des Menübilds auf der Anzeigeeinheit (102) umschalten.

4. Bildverarbeitungsvorrichtung (100) gemäß Anspruch 2, wobei, in Übereinstimmung mit der Umschaltanweisung, die Anzeigeumschaltmittel (251) zwischen Anzeige und Nicht-Anzeige des gesamten Menübilds auf der Anzeigeeinheit (102) umschalten.

5. Bildverarbeitungsvorrichtung (100) gemäß einem der Ansprüche 1 bis 4, ferner aufweisend:
eine Anweisungseinheit, die bedient wird um die Umschaltanweisung zu geben,
wobei die Anweisungseinheit fest an einer vorbestimmten Position auf einem Bildschirm der Anzeigeeinheit (102) angezeigt wird.

6. Bildverarbeitungsvorrichtung (100) gemäß einem der Ansprüche 1 bis 5, wobei die Bildauswahlmittel (241) einen Abschnitt des Bildes des Zielobjekts (2) auswählen können, der Abschnitt einen der mehreren Teile überlappt.

7. Bildverarbeitungsvorrichtung (100) gemäß einem der Ansprüche 1 bis 6, wobei die Anzeigeeinheit (102) und die Bildverarbeitungsvorrichtung in tragbarer Weise miteinander integriert sind.

## Revendications

1. Appareil de traitement d'image (100) destiné à traiter une image d'un objet cible (2), tout en affichant l'image de l'objet cible (2) sur une unité d'affichage (102) pour l'inspection de l'objet cible (2), l'appareil de traitement d'image (100) comprenant :
- un moyen d'affichage d'image de cible (247) destiné à afficher l'image de l'objet cible (2) sur l'unité d'affichage (102) ;
- un moyen de sélection d'image (241) destiné à sélectionner, en fonction d'une opération de sélection, la totalité ou une partie de l'image de l'objet cible (2) affichée sur l'unité d'affichage (102) ; et
- un moyen d'affichage de menu (244) destiné à afficher une image de menu de manière à ce qu'elle soit superposée sur l'image de l'objet cible (2) dans un état de transparence, l'image de menu étant constituée d'une pluralité de parties qui sont des images partielles pour afficher des informations ou recevoir une opération d'entrée, dans lequel le moyen d'affichage de menu (244) comprend un moyen de commutation d'affichage (251) destiné à modifier, en fonction d'une instruction de commutation provenant de l'extérieur, l'image de menu affichée sur l'unité d'affichage (102) entre une première image de menu d'une première taille et une seconde image de menu d'une seconde taille qui est différente de la première taille.

2. Appareil de traitement d'image (100) selon la revendication 1, dans lequel le nombre de parties de la première image de menu est différent du nombre de parties de la seconde image de menu.

3. Appareil de traitement d'image (100) selon la revendication 2, dans lequel, en fonction de l'instruction de commutation, le moyen de commutation d'affichage (251) bascule entre l'affichage et le non-affichage de toutes les parties de l'image de menu sur l'unité d'affichage (102) .

4. Appareil de traitement d'image (100) selon la revendication 2, dans lequel, en fonction de l'instruction de commutation, le moyen de commutation d'affichage (251) bascule entre l'affichage et le non-affichage de la totalité de l'image de menu sur l'unité d'affichage (102).

5. Appareil de traitement d'image (100) selon l'une quelconque des revendications 1 à 4, comprenant en outre :
- une unité d'instruction qui est utilisée dans le but de donner l'instruction de commutation,
dans lequel l'unité d'instruction est affichée fixement dans une position prédéterminée sur un écran de l'unité d'affichage (102).

6. Appareil de traitement d'image (100) selon l'une quelconque des revendications 1 à 5, dans lequel le moyen de sélection d'image (241) peut sélectionner une partie de l'image de l'objet cible (2) qui est recouverte par un nombre quelconque de la pluralité de parties.

7. Appareil de traitement d'image (100) selon l'une quelconque des revendications 1 à 6, dans lequel l'unité d'affichage (102) et l'appareil de traitement d'image sont configurés solidairement de manière être portables.
